Europäisches Patentamt

European Patent Office

Office européen des brevets

(19)

(11) Veröffentlichungsnummer: **0 171 079**
**B1**

(12) **EUROPÄISCHE PATENTSCHRIFT**

(45) Veröffentlichungstag der Patentschrift:
24.05.89

(51) Int. Cl.⁴: **C 11 B 1/10**

(21) Anmeldenummer: 85109986.1

(22) Anmeldetag: 08.08.85

(54) Verfahren zur Extraktion von Öl aus ölhaltigen vegetabilen Stoffen.

(30) Priorität: 09.08.84 DE 3429416

(43) Veröffentlichungstag der Anmeldung:
12.02.86 Patentblatt 86/7

(45) Bekanntmachung des Hinweises auf die Patenterteilung:
24.05.89 Patentblatt 89/21

(84) Benannte Vertragsstaaten:
DE FR GB NL

(56) Entgegenhaltungen:
DE-A- 3 231 465

CHEMICAL ABSTRACTS, Band 89, Nr. 6, 7. August 1978, Zusammenfassung Nr. 45531c, Columbus, Ohio, US; F. PANZNER et al.: "Separation of glycerides in the presence of supercritical carbon dioxide", & INST. CHEM. ENG. SYMP. SER. 1978, 54(Alternatives Distill.) 165-72
JOURNAL OF THE AMERICAN OIL CHEMISTS' SOCIETY, Band 62, Nr. 8, August 1985, Seiten 1223-1230, Champaign, Illinois, US; R. EGGERS: "High pressure extraction of oil seed"

(73) Patentinhaber: Peter, Siegfried, Prof. Dr., Lindenweg 3, D-8525 Uttenreuth-Weiher (DE)
Patentinhaber: Brunner, Gerd, Dr., Wallersbacher Weg 10, D-8542 Roth 3 (DE)

(72) Erfinder: Peter, Siegfried, Prof. Dr., Lindenweg 3, D-8525 Uttenreuth-Weiher (DE)
Erfinder: Brunner, Gerd, Dr., Wallersbacher Weg 10, D-8542 Roth 3 (DE)

(74) Vertreter: Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)

## Beschreibung

Die Erfindung betrifft ein Verfahren zur Extraktion von Öl aus ölhaltigen vegetabilen Stoffen, insbesondere Ölsaaten wie z. B. Sojabohnen oder Rapssamen.

Es ist bekannt, ölhaltige Feststoffe (nach einer Aufschlussbehandlung) mit flüssigen Lösungsmitteln, wie beispielsweise Hexan, zu extrahieren. Bei stark ölhaltigen Saaten wird zweckmässig eine mechanische Entölung durch Pressen vorgeschaltet. Nachteilig bei dieser Art der Extraktion ist die Abtrennung des flüssigen Lösungsmittels vom Rückstand und Extrakt, da diese aufwendig und unvollständig ist und zu Lösungsmittelverlusten führt. Ferner ist festzustellen, dass Hexan unspezifisch neben Glyzeriden auch viele Fettbegleitstoffe, wie z. B. Phosphatide, extrahiert, die gesondert abgetrennt werden müssen.

Die Trennung von Rückstand und Extraktionsmittel wird bei der sogenannten Gasextraktion verbessert, bei der ein überkritisches Gas als Extraktionsmittel verwendet und die Abtrennung des extrahierten Öls durch eine Dichteänderung durch Entspannen und/oder Temperaturerhöhung erreicht wird. Bei der Gasextraktion können beispielsweise Kohlendioxid oder Ethan im superkritischen Zustand verwendet werden. Kohlendioxid ist zwar physiologisch unbedenklich und unbrennbar, es weist jedoch eine relativ geringe Löslichkeit für Glyzeride auf, so dass hohe Drücke wie etwa 700 bar angewendet werden müssen, um eine ausreichend kurze Extraktionszeit zu erreichen. Wenn auch Ethan Glyzeride besser löst als Kohlendioxid, ist dieses als Extraktionsmittel ebenfalls nicht zufriedenstellend. Wie bei allen gasförmigen Extraktionsmitteln muss auch bei diesem zur Abtrennung des extrahierten Öles dessen Dichte wesentlich verringert werden, wozu sich eine Temperaturerhöhung oder eine Verminderung des Druckes eignen. Dabei ist eine Entspannung erheblich wirksamer, zumal auch die Temperaturbeständigkeit der zu gewinnenden Öle begrenzt ist. Man muss aber zur Abscheidung des extrahierten Öls den Druck des Extraktionsmittels sehr erheblich verringern (in vielen Fällen auf wenigstens die Hälfte des Ausgangsdruckes) und dann das Extraktionsmittel wieder auf den Ausgangsdruck verdichten.

Aufgabe der Erfindung ist die Schaffung eines Verfahrens bei dem es möglich ist, mit relativ geringem Druck zu arbeiten, wobei die Abtrennung des extrahierten vegetabilischen Öls aus dem Extraktionsmittel durch relativ geringe Entspannung möglich sein soll. Des weiteren soll jegliche während des Extraktionsverfahrens durchgeführte Temperaturänderung innerhalb relativ enger Grenzen bleiben, und das Extraktionsmittel soll ferner mit den vegetabilischen Ölen in hoher Konzentration beladen werden können, damit die Menge von ersterem möglichst klein bleibt.

In Inst. Chem. Eng. Symp. Ser. 1978, 54, 165–72 (Chemical Abstracts, 89, Nr. 8, Referat 45031) ist beschrieben, dass Triglyzerid-Gemische durch Extraktion mit superkritischem Kohlendioxid in Kombination mit $CCl_4$ oder n-Hexan als Schleppmittel zufriedenstellend aufgetrennt werden konnten.

Gegenstand der Erfindung ist ein Verfahren zur Extraktion von Öl mit Hilfe von Komprimierten Gasen, bei welchem man mit einem Einphasen-Gemisch aus einem überkritischen Gas und einem Schleppmittel extrahiert, das beladene Extraktionsmittel von den extrahierten Stoffen abtrennt und in einem Regenerator durch Temperaturerhöhung und/oder Druckverminderung in eine ölreiche flüssige Phase und eine gasförmige ölarme Phase überführt, die genannten Phasen trennt und die ölreiche Phase entspannt, das dadurch gekennzeichnet ist, dass das Öl aus ölhaltigen vegetabilischen Stoffen extrahiert wird; das Schleppmittel im unterkritischen Zustand vorliegt; Druck, Temperatur und Zusammensetzung des als Extraktionsmittel dienenden Gemisches aus überkritischem Gas und Schleppmittel so gewählt werden, dass das zu extrahierende Öl und das Extraktionsmittel in jedem Verhältnis miteinander mischbar sind; und die Abtrennung des beladenen Extraktionsmittels von den extrahierten Stoffen in einem Abscheidebehälter erfolgt.

Gegebenenfalls wird das im erhaltenen Öl noch verbliebene Schleppmittel zurückgewonnen.

Erfindungsgemäss wird also zur Extraktion neben dem überkritischen Gas eine weitere unterkritische Komponente, d. h. ein Schleppmittel, zugesetzt, wobei der Extraktionsdruck erheblich herabgesetzt werden kann. Selbst wenn der Dampfdruck des Schleppmittels relativ gering ist, gelingt seine Entfernung aus dem erzeugten Öl leicht und vollständig, da die sich bei der Entspannung entlösende überkritische Komponente das Schleppmittel weitgehend mitreisst. Die Wahl der Schleppmittelkonzentration sowie der Druck- und Temperaturbedingungen für den jeweils vorliegenden Einzelfall geschieht – gegebenenfalls nach entsprechenden Vorversuchen – in der Weise, dass das Gemisch aus dem zu extrahierenden Öl, welches meist ein Triglyzerid ist, dem Schleppmittel und dem komprimierten überkritischen Gas einphasig ist. Dadurch kann die Menge an umlaufendem Lösungsmittel klein gehalten und wirtschaftlich gearbeitet werden. Unter den Extraktionsbedingungen ist auch das binäre System aus Schleppmittel und überkritischer Komponente in jedem Verhältnis mischbar; es ist einphasig. Wenn beispielsweise Sojaöl mit einem Extraktionsmittel aus Propan und Kohlendioxid behandelt werden soll, ist festzustellen, dass bei 50°C und einem Druck von 300 bar das Sojaöl in jedem Verhältnis mischbar ist, wenn das Verhältnis von Propan zu Kohlendioxid 1:2 beträgt. Wird der Gehalt an Schleppmittel im Extraktionsmittel erhöht, so sinkt der Druck, bei dem vollständige Mischbarkeit zwischen dem Sojaöl und dem Extraktionsmittel eintritt. Bei gleicher Zusammensetzung des Extraktionsmittels

nimmt der Druck, bei dem vollständige Mischbarkeit zwischen Öl und Extraktionsmittel eintritt, mit Abnehmen der Temperatur ab.

Auf Grund derartiger Zusammenhänge lassen sich also für den jeweiligen Einzelfall zweckmässige Parameter des erfindungsgemässen Extraktionsverfahrens ohne weiteres festlegen.

Es wurde erfindungsgemäss weiter gefunden, dass eine relativ geringe Temperaturerhöhung um etwa 30 bis 50 °C bei gleichbleibendem Druck dazu führt, dass das von den Feststoffen befreite Extraktionsmittel in eine flüssige ölreiche Phase und in eine gasförmige ölarme Phase aufgetrennt wird. Eine derartige Trennung ist also bei gleichbleibendem Druck technisch auf sehr einfache Weise möglich. Das derart wiedergewonnene Extraktionsmittel wird zweckmässig zurückgeführt, nachdem es z. B. durch eine entsprechende Temperaturerniedrigung wieder in den superkritischen Zustand gebracht worden ist.

Die eben angegebene Überführung des Einphasen-Systems in zwei Phasen z. B. durch Erwärmen ist dann besonders wirkungsvoll, wenn bei gegebenem Druck und bei gegebener Temperatur das Extraktionsmittel aus überkritischen komprimierten Gas und Schleppmittel einen solchen Gehalt an Schleppmittel besitzt, der nur wenig höher als derjenige ist, bei dem das vegetabilische Öl mit dem Extraktionsmittel in jedem Verhältnis mischbar wird.

Wenn beispielsweise das 1,1- bis 4fache des kritischen Drucks der überkritischen Komponente angewendet wird und die angewendete Temperatur im Bereich zwischen der kritischen Temperatur der überkritischen Komponente und der kritischen Temperatur des Schleppmittels liegt, bestehen folgende Zusammenhänge:

Zwischen dem vegetabilischen Öl und der überkritischen Komponente besteht eine Mischungslücke. Mit wachsendem Gehalt an Schleppmittel vermindert sich die Mischungslücke und verschwindet bei einem bestimmten Gehalt des Schleppmittels bei den gewählten Druck- und Temperaturbedingungen. Das Extraktionsmittel ist dann in jedem Verhältnis mit dem Öl mischbar.

Wie bereits ausgeführt, werden zur Extraktion Temperatur Druck und Zusammensetzung so gewählt, dass die Mischung aus vegetabilischen Öl, Schleppmittel und überkritischer Komponente eine einzige fluide Phase, die grössere Anteile an Öl enthalten kann, bildet. Die ölhaltige Feststoffe werden bei der Durchführung des erfindungsgemässen Extraktionsverfahrens von dieser fluiden Phase abgetrennt. Die Bildung von zwei Phasen aus der verbleibenden fluiden Phase erfolgt durch Temperaturerhöhung und/oder Absenken des Druckes. Es ist vorteilhaft, wenn lediglich eine Temperaturerhöhung erfolgt und der Druck unverändert bleibt.

Wie bereits angegeben, wird die dabei entstehende ölreiche flüssige Phase abgezogen und entspannt. Das bei dieser Entspannung anfallende Gas bzw. Schleppmittel wird zweckmässig zurückgeführt. Es wird getrennt oder zusammen mit im aus dem Regenerator anfallenden Gas wieder in den superkritischen Zustand gebracht.

Ebenfalls ist es zweckmässig, das im Öl gelöste Schleppmittel beispielsweise durch Temperaturerhöhung zu gewinnen und zurückzuführen.

Es ist selbstverständlich, dass bei einem kontinuierlichen Verfahren derjenige Teil an Schleppmittel und Gas, der mit dem Öl ausgetragen wird, ersetzt werden sollte.

Geeignete Temperaturen bei der Extraktion hängen selbstverständlich von der Art des verwendeten überkritischen Gases und des Schleppmittels ab. Sie betragen insbesondere zwischen 20 und 90 °C, vorzugsweise zwischen 35 und 60 °C, während geeignete Drücke insbesondere zwischen 50 und 500 bar, vorzugsweise zwischen 80 und 300 bar, liegen.

Beispiele von erfindungsgemäss geeigneten überkritischen Gasen sind $CO_2$, $NO_2$, Ethan, $CHF_3$, $CF_4$, Ethylen, Methan, $CF_3Cl$, $C_2F_6$, $SF_6$ oder Gemische zweier oder mehr dieser Komponenten.

Beispiele von erfindungsgemäss verwendbaren Schleppmitteln sind Propan, Butan, Pentan, $CHFCl_2$, $CHF_2Cl$, $CH_2Cl_2$, Dimethylether, Methanol, Ethanol, Aceton, Ethylacetat, Ethylformiat, Formaldehyddimethylacetal, Methylethylether, Diethylether oder Gemische von zwei oder mehr dieser Komponenten.

Bei einer speziellen Ausführungsform des erfindungsgemässen Verfahrens wird als überkritische Komponente Kohlendioxid und als Schleppmittel Propan verwendet, wobei zur Extraktion Temperaturen von 35 bis 60 °C und Drücke von 80 bis 300 bar angewendet werden.

Eine andere Ausführungsform verwendet als überkritische Komponente Kohlendioxid und als Schleppmittel $CHFCl_2$, und wendet bei der Extraktion Temperaturen von 35 bis 60 °C und Drücke von 80 bis 300 bar an.

Auch eine Ausführungsform des beanspruchten Verfahrens mit Ethan als überkritische Komponente und $CHFCl_2$ als Schleppmittel ist vorteilhaft, wobei Temperaturen von 35 bis 60 °C und Drücke von 80 bis 300 bar angewendet werden.

Bei der erstgenannten Ausführungsform des erfindungsgemässen Verfahrens kann beispielsweise eine Mischung aus 30 bis 70% Kohlendioxid und 70 bis 30% Propan als Extraktionsmittel verwendet werden. Diese Extraktionsmittelmischung wird bei dem angegebenen Temperaturbereich von 35 bis 60 °C bei einem Druck im Bereich von 100 und 300 bar zur Extraktion verwendet. Die Extraktion wird z. B. bei einer Feststoffverweilzeit von 15 bis 45 Minuten durchgeführt. Im Regenerator, einem zweiten Druckbehälter, wird dann eine Temperatur im Bereich von 70 bis 120 °C angewendet, wobei eine flüssige, ölreiche Phase und eine gasförmige ölarme Phase entstehen. Die ölreiche Phase wird hernach aus dem Druckbehälter abgezogen und entspannt, wobei das gewünschte Öl erhalten wird.

Es wurde bereits darauf hingewiesen, dass das erfindungsgemässe Extraktionsverfahren eine ganze Reihe von beträchtlichen Vorteilen aufweist. Es ist bei relativ geringem Druck durchführbar und die Druckänderungen während des Extraktionsverfahrens halten sich in engen Grenzen. Das einphasige System mit der superkritischen Komponente kann durch relativ geringe Temperaturerhöhung in ein System mit zwei Phasen überführt werden. Da das Extraktionsmittel aus superkritischer Komponente und Schleppmittel einen hohen Anteil an vegetabilischen Ölen aufnehmen kann, kann die Menge an Extraktionsmitteln kleingehalten werden. Des weiteren ist das erfindungsgemäss verwendete Extraktionssystem ausserordentlich flexibel und kann den Bedingungen des jeweils vorliegenden Einzelfalles in ausserordentlich guter Weise angepasst werden. Die zu extrahierenden Öle werden bei dem erfindungsgemässen Extraktionsverfahren sehr geschont, was insbesondere für die notwendigen Verfahrenstemperaturen zutrifft. Schliesslich ist die Trennung des Öls von den Feststoffen ausserordentlich effektiv, die Extraktionszeiten sind sehr kurz.

Die nachfolgenden Beispiele dienen zur weiteren Erläuterung des erfindungsgemässen Verfahrens.

Beispiel 1

Vorentölter Rapssamen (Rapsschilfer) mit einem Restölgehalt von etwa 25 Gew.% Öl wird in einer Menge von 250 g in einen Druckbehälter (Abscheidebehälter) gebracht und von einer Gasmischung aus Kohlendioxid und Propan (je 50 Gew.% Anteil) bei einer Temperatur von 51,5°C und einem Druck von 300 bar mit einem Mengenstrom von 500 $l_N$/15 min durchströmt. Das beladene Extraktionsmittel wird anschliessend auf 105°C erwärmt und das sich abscheidende Öl aufgefangen. Nach 20 min beträgt die Extraktmenge 52 g.

Beispiel 2

Das gleiche Material wird mit einer Gasmischung aus 39 gew.% $CO_2$ und 61 Gew.% $CHF_2Cl$ bei 52°C und 155 bar extrahiert. Die Extraktphase wird anschliessend auf 105°C erwärmt. Bei einer Einwaage von 329 g, einem Gasmengenstrom von 500 $l_N$/15 min beträgt die Extraktmenge nach 2701–85 g.

Beispiel 3

250 g Sojapulver wird in einen Druckbehälter (Abscheidebehälter) gebracht und bei einer Temperatur von 50°C und einem Druck von 300 bar mit 33 $l_N$/min einer Gasmischung aus 50 Gew.% $CO_2$ und 50 Gew.% Propan durchströmt. Das beladene Extraktionsgas wird anschliessend auf 105°C erwärmt und das abgeschiedene Öl aufgefangen. Nach 45 min sind 51,5 g Öl angefallen.

Patentansprüche

1. Verfahren zur Extraktion von Öl mit Hilfe von komprimierten Gasen bei welchem man mit einem Einphasen-Gemisch aus einem überkritischen Gas und einem Schleppmittel extrahiert, das beladene Extraktionsmittel von den extrahierten Stoffen abtrennt und in einem Regenerator durch Temperaturerhöhung und/oder Druckverminderung in eine ölreiche flüssige Phase und eine gasförmige ölarme Phase überführt, die genannten Phasen trennt und die ölreiche Phase entspannt, dadurch gekennzeichnet, dass das Öl aus ölhaltigen vegetabilischen Stoffen extrahiert wird; das Schleppmittel im unterkritischen Zustand vorliegt; Druck, Temperatur und Zusammensetzung des als Extraktionsmittel dienenden Gemisches aus überkritischem Gas und Schleppmittel so gewählt werden, dass das zu extrahierende Öl und das Extraktionsmittel in jedem Verhältnis miteinander mischbar sind; und die Abtrennung des beladenen Extraktionsmittels von den extrahierten Stoffen in einem Abscheidebehälter erfolgt.

2. Verfahren nach Anspruch 1, dadurch gekennzeichnet, dass das im erhaltenen Öl noch verbliebene Schleppmittel zurückgewonnen wird.

3. Verfahren nach Anspruch 1 bis 2, dadurch gekennzeichnet, dass die in dem Regenerator abgetrennte gasförmige ölarme Phase durch Temperaturerniedrigung und/oder Druckerhöhung erneut in den überkritischen Zustand gebracht und zurückgeführt wird.

4. Verfahren nach Anspruch 1 bis 3, dadurch gekennzeichnet, dass die nach der Entspannung erhaltene gasförmige Phase wieder zurückgeführt wird, nachdem sie allein oder zusammen mit der im Regenerator abgetrennten gasförmigen ölarme Phase durch Druckerhöhung und/oder Temperaturerniedrigung in den überkritischen Zustand gebracht worden ist.

5. Verfahren nach Anspruch 1 bis 4, dadurch gekennzeichnet, dass die Extraktion in einem vom Abscheidebehälter getrennten Mischbehälter vorgenommen wird.

6. Verfahren nach Anspruch 1 bis 5, dadurch gekennzeichnet, dass die Extraktion bei Temperaturen zwischen 20 und 90°C und Drücken zwischen 50 und 500 bar vorgenommen wird.

7. Verfahren nach Anspruch 1 bis 6, dadurch gekennzeichnet, dass die Extraktion bei Temperaturen zwischen 35 und 60°C und Drücken zwischen 80 und 300 bar vorgenommen wird.

8. Verfahren nach Anspruch 1 bis 7, dadurch gekennzeichnet, dass als überkritische Gase $CO_2$, $N_2O$, Ethan, $CHF_3$, $CF_4$, Ethylen, Methan, $CF_3Cl$, $C_2F_6$, $SF_6$ oder deren Gemische verwendet werden.

9. Verfahren nach Anspruch 1 bis 8, dadurch gekennzeichnet, dass als Schleppmittel Propan, Butan, Pentan, $CHFCl_2$, $CHF_2Cl$, $CH_2Cl_2$, Dimethylether, Methanol, Ethanol, Aceton, Ethylacetat, Ethylformiat, Formaldehydimethylacetal, Methylethylether, Diethylether und deren Gemische verwendet werden.

10. Verfahren nach Anspruch 7, dadurch gekennzeichnet, dass zur Extraktion als überkritische Gas/Schleppmittel-Kombination Kohlendioxid/Propan, Kohlendioxid/$CHFCl_2$, Kohlendio-

xid/CHF$_2$Cl, Ethan/CHFCl$_2$ oder Ethan/Butan verwendet wird.

## Claims

1. Process for extracting oil by means of compressed gases in which process the extraction is effected with a single-phase-mixture of a supercritical gas and an entrainer, the loaded extractant is separated from the extracted materials and transformed in a regenerator by temperature increase and/or pressure decrease into an oil-rich liquid phase and a gaseous phase lean in oil, said phases are separated and the oil-rich phase is pressure-released, characterized in that the oil is extracted from oil-bearing vegetable products; the entrainer is present in subcritical state; pressure, temperature and composition of the mixture of supercritical gas and entrainer which mixture serves as extractant are chosen so that the oil to be extracted and the extractant are miscible with each other in any desired ratio, and the separation of the loaded extractant from the extracted products is carried out in a separating vessel.

2. Process according to claim 1 characterized in that the entrainer still remaining in the obtained oil is recovered.

3. Process according to claims 1 to 2, characterize in that the gaseous phase lean in oil separated in the regenerator is again brought to supercritical state by temperature decrease and/or pressure increase and recycled.

4. Process according to claims 1 to 3, characterized in that the gaseous phase obtained after pressure release is recycled after having again been brought to the supercritical state by pressure increase and/or temperature decrease, either alone or together with the gaseous phase lean in oil, separated in the regenerator.

5. Process according to claims 1 to 4, characterized in that the extraction is carried out in a mixing vessel separated from the separating vessel.

6. Process according to claims 1 to 5, characterized in that the extraction is carried out at temperatures between 20 and 90°C and pressures between 50 and 500 bar.

7. Process according to claims 1 to 6, characterized in that the extraction is carried out at temperatures between 35 and 60°C and pressures between 80 and 300 bar.

8. Process according to claims 1 to 7, characterized in that as supercritical gases CO$_2$, N$_2$O, ethane, CHF$_3$, CF$_4$, ethylene, methane, CF$_3$Cl, C$_2$F$_6$, SF$_6$ or mixtures thereof are used.

9. Process according to claims 1 to 8, characterized in that as entrainer propane, butane, pentane, CHFCl$_2$, CHF$_2$Cl, CH$_2$Cl$_2$, dimethyl ether, methanol, ethanol, acetone, ethyl acetate, ethyl formiate, formaldehyde dimethyl acetal, methyl ethyl ether, diethyl ether and mixtures thereof are used.

10. Process according to claim 7, characterized in that for the extraction as combination of supercritical gas/entrainer carbon dioxide/propane, carbon dioxide/CHFCl$_2$, or ethane/butane are used.

## Revendications

1. Procédé pour extraire de l'huile à l'aide de gaz comprimés, selon lequel on extrait à l'aide d'un mélange en une seule phase, constitué d'un gaz surcritique et d'un entraîneur, on sépare l'agent d'extraction chargé d'avec des substances extraites, et, par élévation de la température et/ou abaissement de la pression, on le transforme en une phase liquide riche en huile et en une phase gazeuse pauvre en huile, on sépare les phases précitées et l'on détend la phase riche en huile, procédé caractérisé en ce qu'on extrait l'huile de produits végétaux oléagineux; l'entraîneur est présent à l'état sous-critique; on choisit, la température et la composition du mélange de gaz surcritique et d'entraîneur, servant d'agent d'extraction, de manière que l'huile à extraire et l'agent d'extraction soient miscibles l'un à l'autre en toutes proportions; et la séparation de l'agent d'extraction, chargé, d'avec les substances extraites a lieu dans un séparateur.

2. Procédé selon la revendication 1, caractérisé en ce qu'on récupère l'entraîneur demeuré encore dans l'huile obtenue.

3. Procédé selon l'une des revendications 1 et 2, caractérisé en ce que, par abaissement de la température et/ou élévation de la pression, on fait passer à nouveau à l'état surcritique la phase gazeuse, pauvre en huile, qui a été séparée dans le régénérateur, et on la recycle.

4. Procédé selon l'une des revendications 1 à 3, caractérisé en ce qu'on recycle la phase gazeuse, obtenue après avoir fait passer, par élévation de la pression et/ou par abaissement de la température à l'état surcritique cette phase, seule ou avec la phase gazeuse, pauvre en huile, séparée dans le régénérateur.

5. Procédé selon l'une des revendications 1 à 4, caractérisé en ce que l'extraction est réalisée dans un mélangeur, qui est un récipient séparé du séparateur.

6. Procédé selon l'une des revendications 1 à 5, caractérisé en ce qu'on effectue l'extraction à des températures comprises entre 20 et 90°C et sous des pressions comprises entre 50 et 500 bars.

7. Procédé selon l'une des revendications 1 à 6, caractérisé en ce qu'on effectue l'extraction à des températures comprises entre 35 et 60°C et sous des pressions comprises entre 80 et 300 bars.

8. Procédé selon l'une des revendications 1 à 7, caractérisé en ce qu'on utilise comme gaz surcritique CO$_2$, N$_2$O, l'éthane, CHF$_3$, CF$_4$, l'éthylène, le méthane, CF$_3$Cl, C$_2$F$_6$, SF$_6$ ou leurs mélanges.

9. Procédé selon l'une des revendications 1 à 8, caractérisé en ce qu'on utilise comme entraîneur le propane, le butane, le pentane, CHFCl$_2$, CHF$_2$Cl, CH$_2$Cl$_2$ l'éther de diméthyle, le méthanol, l'éthanol, l'acétone, l'acétate d'éthyle, le formiate d'éthyle, le diméthylacétal de formaldéhyde, l'éther de méthyle et d'éthyle, l'éther de diéthyle et leurs mélanges.

10. Procédé selon la revendication 7, caractérisé en ce qu'on utilise pour l'extraction, comme combinaison gaz surcritique/entraîneur, un ensemble anhydride carbonique/propane, anhydride carbonique/$CHFCl_2$, anhydride carbonique/ $CHF_2Cl$, éthane/$CHFCl_2$ ou éthane/butane.